# EUROPEAN PATENT APPLICATION

(11) **EP 4 783 591 A2**
(43) Date of publication of application: **29.07.2026**
(21) Application number: 23956199.6
(22) Date of filing: 20.10.2023
(51) Int. Cl.: H04N 21/422, H04N 21/436, H04N 21/4363, H04W 4/80

(54) **DISPLAY DEVICE AND OPERATION METHOD THEREOF**

(71) Applicant: LG Electronics Inc., Yeongdeungpo-gu Seoul 07336 (KR)
(72) Inventor: YU, Seon Il, Seoul 06772 (KR); LEE, Jang Hee, Seoul 06772 (KR)
(74) Representative: Vossius & Partner Patentanwälte Rechtsanwälte mbB
(86) International application number: PCT/KR2023/016407
(87) International publication number: WO 2025/084477

(57) **Abstract**

Disclosed are a display device and an operation method thereof. The display device, according to at least one among various embodiments of the present disclosure, comprises a memory and a processor which: receives a packet from a remote control device; performs pairing by transmitting a scan signal to the remote control device if the received packet has a first parameter value and satisfies a preset condition; and transmits a control signal related to the preset condition to the paired remote control device.

## Description

### Technical Field

The present disclosure relates to a display device and an operational method thereof.

### Background Art

The functions of recent terminals have become diversified, and for example, there are functions of data and voice communication, photographing and video capturing through a camera, voice recording, reproduction of music files through a speaker system, and outputting an image or a video on a display.

Some terminals perform a multimedia player function or have an electronic game play function added thereto.

As such, as the functions of terminals are diversified, for example, the terminals are implemented in the form of a multimedia device (Multimedia player) having complex functions such as photographing of images or moving pictures, reproduction of music or moving picture files, games, and reception of broadcasting.

### Summary of the Invention

### Technical Problem

The present disclosure provides a display device and an operational method thereof capable of pairing with a remote control device only when a predetermined condition is satisfied in a display device capable of pairing with the remote control device, thereby reducing unnecessary power consumption of the remote control device and increasing usable time.

### Technical Solution

A display device according to at least one embodiment of the present disclosure may include: a memory; and a processor configured to receive a packet from a remote control device, when the received packet is a packet having a first parameter value and a preset condition is satisfied, perform pairing by transmitting a scan signal to the remote control device, and transmit a control signal related to the preset condition to the paired remote control device.

According to at least one embodiment of the present disclosure, the processor may, when the received packet is a packet having a second parameter value, perform initial pairing with the remote control device.

According to at least one embodiment of the present disclosure, the processor may, when the preset condition is not satisfied, be configured to control such that the pairing is not performed by ignoring or filtering the packet having the first parameter value.

According to at least one embodiment of the present disclosure, the processor may create a white list including a remote control device having a previous pairing history and store the white list in the memory.

According to at least one embodiment of the present disclosure, the condition may include at least one of whether the remote control device is included in the white list and whether a remote control device finding function is activated.

According to at least one embodiment of the present disclosure, the control signal may include a control command for controlling the paired remote control device to output a sound.

According to at least one embodiment of the present disclosure, the processor may determine whether the preset condition is satisfied based on at least one of an input through a physical button provided on the display device, an input through a virtual button provided on a display panel, and a voice input through a microphone provided on the display device.

A method of operating a display device according to at least one embodiment of the present disclosure may include: receiving a packet from a remote control device; identifying whether the received packet is a packet having a first parameter value; when a preset condition is satisfied, transmitting a scan signal to the remote control device to perform pairing; and transmitting a control signal related to the preset condition to the paired remote control device.

According to at least one embodiment of the present disclosure, in identifying whether the received packet is a packet having a first parameter value, when the received packet is identified as a packet having a second parameter value, initial pairing with the remote control device may be performed.

According to at least one embodiment of the present disclosure, when the preset condition is not satisfied, the packet having the first parameter value may be ignored or filtered to control such that pairing is not performed.

According to at least one embodiment of the present disclosure, the method may further include creating and storing a white list including a remote control device having a previous pairing history.

According to at least one embodiment of the present disclosure, the condition may include at least one of whether the remote control device is included in the white list and whether a remote control device finding function is activated.

According to at least one embodiment of the present disclosure, the control signal may include a control command for controlling the paired remote control device to output a sound.

According to at least one embodiment of the present disclosure, the preset condition may be determined to be satisfied based on at least one of an input through a physical button provided on the display device, an input through a virtual button provided on a display panel, and a voice input through a microphone provided on the display device.

### Advantageous Effects

According to at least one embodiment of the present disclosure, by controlling such that pairing with the remote control device is performed only when a predetermined condition is satisfied, unnecessary power consumption of the remote control device can be reduced, thereby providing an advantage of extending usable time of the remote control device. This also has an additional advantage in that, from the standpoint of the display device, resource efficiency can be improved by reducing unnecessary resource consumption in response to periodic requests of the remote control device.

### Brief Description of the Drawings

FIG. 1 is a block diagram illustrating a configuration of a display device according to an embodiment of the present disclosure.
FIG. 2 is a block diagram illustrating a configuration of a remote control device according to an embodiment of the present disclosure.
FIG. 3 illustrates an example of an actual configuration of a remote control device according to an embodiment of the present disclosure.
FIG. 4 illustrates an example of using a remote control device according to an embodiment of the present disclosure.
FIG. 5 is a view for explaining a landscape mode and a portrait mode of a stand-type display device according to an embodiment of the present disclosure.
FIG. 6 is a block diagram illustrating a connection control operation between a display device and a remote control device according to an embodiment of the present disclosure.
FIGS. 7 and 8 are flowcharts illustrating a connection operation of a display device and a remote control device according to an embodiment of the present disclosure.
FIGS. 9 and 10 are views illustrating an advertising filter policy according to an embodiment of the present disclosure.
FIGS. 11 and 12 are flowcharts illustrating a connection operation of a display device and a remote control device according to another embodiment of the present disclosure.
FIG. 13 is a view illustrating an example of a user interface provided by a display device when a remote control device finding function is activated according to an embodiment of the present disclosure.

### Best Mode

Hereinafter, embodiments related to the present disclosure will be described in more detail with reference to the drawings. In the following description, the suffixes "module" and "unit" for components are assigned or used in combination only in consideration of ease of preparing the specification, and do not by themselves have meanings or roles distinguished from each other.

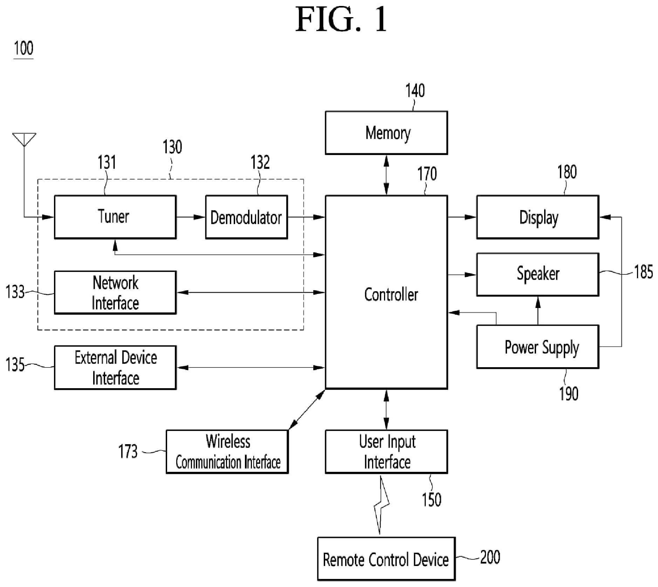

FIG. 1 is a block diagram illustrating a configuration of a display device 100 according to an embodiment of the present disclosure.

Referring to FIG. 1, the display device 100 may include a broadcast receiving unit 130, an external device interface unit 135, a storage unit 140, a user input interface unit 150, a controller 170, a wireless communication unit 173, a voice acquisition unit 175, a display 180, an audio output unit 185, and a power supply unit 190.

The broadcast receiving unit 130 may include a tuner 131, a demodulator 132, and a network interface unit 133.

The tuner 131 may tune to a specific broadcast channel according to a channel selection command. The tuner 131 may receive a broadcast signal for the tuned specific broadcast channel.

The demodulator 132 may separate the received broadcast signal into a video signal, an audio signal, and a data signal related to a broadcast program, and may restore the separated video signal, audio signal, and data signal into a form capable of being output.

The network interface unit 133 may provide an interface for connecting the display device 100 to a wired/wireless network including an Internet network. The network interface unit 133 may transmit or receive data to or from another user or another electronic device through the connected network or another network linked to the connected network.

The network interface unit 133 may access a predetermined web page through the connected network or another network linked to the connected network. That is, by accessing the predetermined web page through the network, data may be transmitted to or received from the corresponding server.

In addition, the network interface unit 133 may receive content or data provided by a content provider or a network operator. That is, the network interface unit 133 may receive content such as a movie, an advertisement, a game, VOD (Video on Demand), a broadcast signal, and information related thereto, provided from the content provider or the network provider through the network.

In addition, the network interface unit 133 may receive update information and an update file of firmware provided by the network operator, and may transmit data to the Internet or to the content provider or the network operator.

The network interface unit 133 may select and receive a desired application among applications open to the public through the network.

The external device interface unit 135 may receive an application or an application list in an adjacent external device, and may transmit the application or the application list to the controller 170 or the storage unit 140.

The external device interface unit 135 may provide a connection path between the display device 100 and an external device. The external device interface unit 135 may receive at least one of video and audio output from an external device connected wirelessly or wiredly to the display device 100, and may transmit the at least one of video and audio to the controller 170. The external device interface unit 135 may include a plurality of external input terminals. The plurality of external input terminals may include an RGB terminal, one or more High-Definition Multimedia Interface (HDMI) terminals, and a component terminal.

A voice signal of an external device input through the external device interface unit 135 may be output through the display 180. A voice signal of an external device input through the external device interface unit 135 may be output through the audio output unit 185.

An external device connectable to the external device interface unit 135 may be any one of a set-top box, a Blu-ray player, a DVD player, a game machine, a sound bar, a smart phone, a PC, a USB memory, and a home theater, but this is merely an example.

In addition, some content data stored in the display device 100 may be transmitted to a selected user or a selected electronic device among another user or another electronic device pre-registered in the display device 100.

The storage unit 140 may store a program for each signal processing and control in the controller 170, and may store a signal-processed video, voice, or data signal.

In addition, the storage unit 140 may also perform a function for temporary storage of a video, voice, or data signal input from the external device interface unit 135 or the network interface unit 133, and may also store information on a predetermined image through a channel memory function.

The storage unit 140 may store an application or an application list input from the external device interface unit 135 or the network interface unit 133.

The display device 100 may reproduce a content file (a moving picture file, a still image file, a music file, a document file, an application file, and the like) stored in the storage unit 140 and provide the content file to a user.

The user input interface unit 150 may transmit a signal input by a user to the controller 170, or may transmit a signal from the controller 170 to the user. For example, the user input interface unit 150 may receive and process a control signal such as power on/off, channel selection, and screen setting from the remote control device 200, or may process a control signal from the controller 170 to be transmitted to the remote control device 200, according to various communication schemes such as a Bluetooth scheme, an Ultra Wideband (UWB) scheme, a ZigBee scheme, a Radio Frequency (RF) communication scheme, or an infrared (IR) communication scheme.

In addition, the user input interface unit 150 may transmit, to the controller 170, a control signal input from a local key (not shown) such as a power key, a channel key, a volume key, and a setting value.

A video signal video-processed by the controller 170 may be input to the display 180 and may be displayed as an image corresponding to the video signal. In addition, the video signal video-processed by the controller 170 may be input to an external output device through the external device interface unit 135.

A voice signal processed by the controller 170 may be audio-output through the audio output unit 185. In addition, the voice signal processed by the controller 170 may be input to an external output device through the external device interface unit 135.

In addition, the controller 170 may control an overall operation within the display device 100.

In addition, the controller 170 may control the display device 100 by a user command input through the user input interface unit 150 or by an internal program, and may allow a user to download a desired application or application list into the display device 100 by accessing a network.

The controller 170 enables channel information selected by a user and the like to be output together with a processed video or voice signal through the display 180 or the audio output unit 185.

In addition, the controller 170 enables, according to an external device image reproduction command received through the user input interface unit 150, a video signal or a voice signal from an external device input through the external device interface unit 135, for example, from a camera or a camcorder, to be output through the display 180 or the audio output unit 185.

Meanwhile, the controller 170 may control the display 180 to display an image, and for example, may control such that a broadcast image input through the tuner 131, an external input image input through the external device interface unit 135, an image input through the network interface unit, or an image stored in the storage unit 140 is displayed on the display 180. In this case, the image displayed on the display 180 may be a still image or a moving image, and may be a 2D image or a 3D image.

In addition, the controller 170 may control such that content stored in the display device 100, received broadcast content, or external input content input from the outside is reproduced, and the content may be in various forms such as a broadcast image, an external input image, an audio file, a still image, a connected web screen, and a document file.

The wireless communication unit 173 may perform communication with an external device through wired or wireless communication. The wireless communication unit 173 may perform short range communication with an external device. For this, the wireless communication unit 173 may support short range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (Wireless USB) technologies. Such wireless communication unit 173 may support wireless communication between the display device 100 and a wireless communication system, between the display device 100 and another display device 100, or between the display device 100 and a network in which the display device 100 or an external server is located, through a short range wireless communication network (Wireless Area Networks). The short range wireless communication network may be a Wireless Personal Area Network.

Here, another display device 100 may be a wearable device capable of mutually exchanging data with the display device 100 according to the present disclosure or capable of being linked, for example, a smart watch, smart glass, HMD (head mounted display), or a mobile terminal such as a smart phone. The wireless communication unit 173 may detect or recognize a wearable device capable of communication around the display device 100. Furthermore, when the detected wearable device is an authenticated device authenticated to communicate with the display device 100 according to the present disclosure, the controller 170 may transmit at least a part of data processed in the display device 100 to the wearable device through the wireless communication unit 173. Accordingly, a user of the wearable device may use the data processed in the display device 100 through the wearable device.

The voice acquisition unit 175 may acquire audio. The voice acquisition unit 175 may include at least one microphone (not shown), and may acquire audio around the display device 100 through the microphone (not shown).

The display 180 may convert each of a video signal, a data signal, and an OSD signal processed by the controller 170, or a video signal, a data signal, and the like received from the external device interface unit 135, into R, G, and B signals, thereby generating a driving signal.

Meanwhile, since the display device 100 illustrated in FIG. 1 is merely one embodiment of the present disclosure, some of the illustrated components may be integrated, added, or omitted according to specifications of the display device 100 actually implemented.

That is, as necessary, two or more components may be combined into one component, or one component may be subdivided into two or more components. In addition, functions performed in each block are for explaining embodiments of the present disclosure, and specific operations or devices thereof do not limit the scope of rights of the present disclosure.

According to another embodiment of the present disclosure, unlike that illustrated in FIG. 1, the display device 100 may receive and reproduce an image through the network interface unit 133 or the external device interface unit 135 without including the tuner 131 and the demodulator 132.

For example, the display device 100 may be implemented separately into an image processing device such as a set-top box for receiving a broadcast signal or content according to various network services, and a content reproducing device for reproducing content input from the image processing device.

In this case, a method of operating a display device according to an embodiment of the present disclosure, which will be described below, may be performed not only by the display device 100 as described with reference to FIG. 1, but also by any one of an image processing device such as a separate set-top box or a content reproducing device including the display 180 and the audio output unit 185.

The audio output unit 185 receives a voice-processed signal from the controller 170 and outputs the voice-processed signal as voice.

The power supply unit 190 supplies corresponding power throughout the display device 100. In particular, power may be supplied to the controller 170, which may be implemented in the form of a system on chip (SOC), the display 180 for displaying an image, and the audio output unit 185 for audio output.

Specifically, the power supply unit 190 may include a converter for converting AC power into DC power, and a dc/dc converter for converting a level of the DC power.

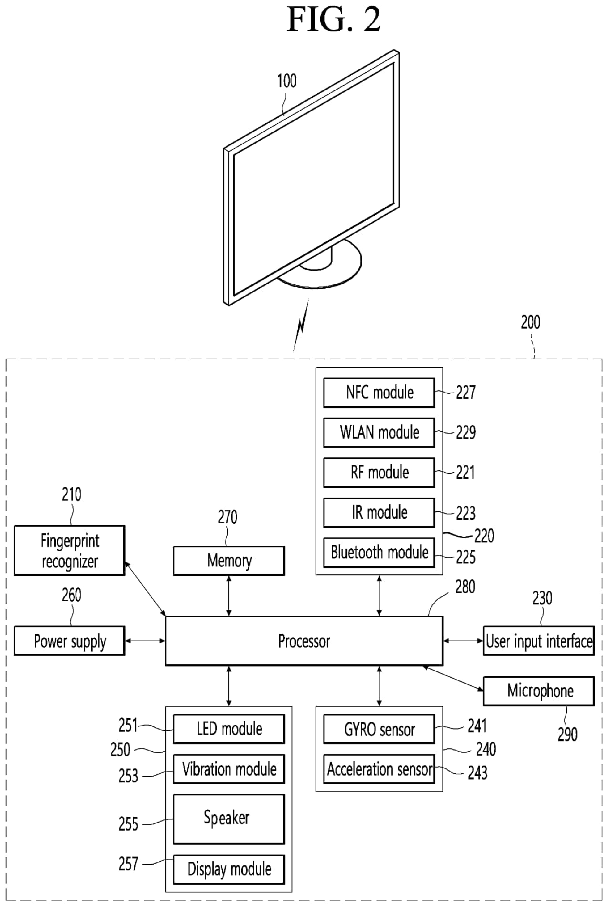

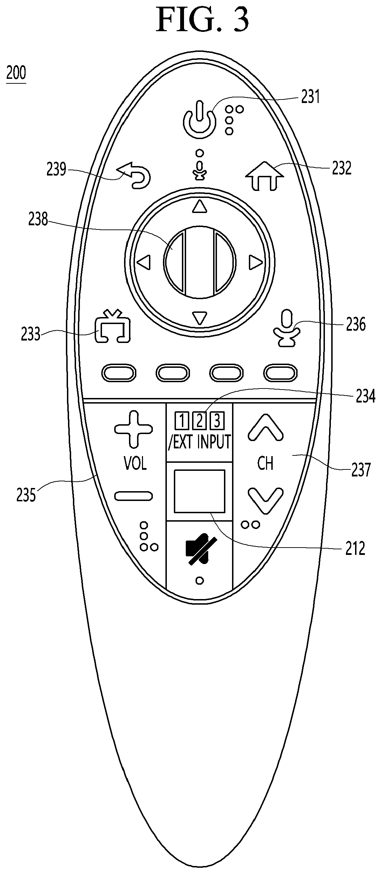

Next, a remote control device according to an embodiment of the present disclosure will be described with reference to FIGS. 2 and 3.

FIG. 2 is a block diagram of a remote control device according to an embodiment of the present disclosure, and FIG. 3 illustrates an example of an actual configuration of a remote control device according to an embodiment of the present disclosure.

First, referring to FIG. 2, the remote control device 200 may include a fingerprint recognizer 210, a wireless communication unit 220, a user input unit 230, a sensor unit 240, an output unit 250, a power supply unit 260, a storage unit 270, a controller 280, and a voice acquisition unit 290.

Referring to FIG. 2, the wireless communication unit 220 transmits and receives signals with any one of the display devices according to embodiments of the present disclosure described above.

The remote control device 200 may include an RF module 221 capable of transmitting and receiving signals with the display device 100 according to an RF communication standard, and may include an IR module 223 capable of transmitting and receiving signals with the display device 100 according to an IR communication standard. In addition, the remote control device 200 may include a Bluetooth module 225 capable of transmitting and receiving signals with the display device 100 according to a Bluetooth communication standard. In addition, the remote control device 200 may include an NFC module 227 capable of transmitting and receiving signals with the display device 100 according to an NFC communication standard, and may include a WLAN module 229 capable of transmitting and receiving signals with the display device 100 according to a Wireless LAN (WLAN) communication standard.

In addition, the remote control device 200 transmits, to the display device 100, a signal including information on movement of the remote control device 200 through the wireless communication unit 220.

Meanwhile, the remote control device 200 may receive a signal transmitted by the display device 100 through the RF module 221, and may transmit, to the display device 100, a command related to power on/off, channel change, volume change, and the like through the IR module 223 as necessary.

The user input unit 230 may be configured as a keypad, a button, a touch pad, or a touch screen. A user may input, to the remote control device 200, a command related to the display device 100 by operating the user input unit 230. When the user input unit 230 includes a hard key button, the user may input a command related to the display device 100 to the remote control device 200 through a push operation of the hard key button. This will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, a confirmation button 238, and a back button 239.

The fingerprint recognition button 212 may be a button for recognizing a fingerprint of a user. In one embodiment, the fingerprint recognition button 212 may support a push operation, and thus may receive a push operation and a fingerprint recognition operation. The power button 231 may be a button for turning on/off the display device 100. The home button 232 may be a button for moving to a home screen of the display device 100. The live button 233 may be a button for displaying a real-time broadcast program. The external input button 234 may be a button for receiving an external input connected to the display device 100. The volume control button 235 may be a button for adjusting a volume output by the display device 100. The voice recognition button 236 may be a button for receiving a voice of a user and recognizing the received voice. The channel change button 237 may be a button for receiving a broadcast signal of a specific broadcast channel. The confirmation button 238 may be a button for selecting a specific function, and the back button 239 may be a button for returning to a previous screen.

FIG. 2 will be described again.

When the user input unit 230 includes a touch screen, a user may input, to the remote control device 200, a command related to the display device 100 by touching a soft key of the touch screen. In addition, the user input unit 230 may include various types of input devices that can be operated by the user, such as a scroll key or a jog key, and the present embodiment does not limit the scope of rights of the present disclosure.

The sensor unit 240 may include a gyro sensor 241 or an acceleration sensor 243, and the gyro sensor 241 may sense information on movement of the remote control device 200.

For example, the gyro sensor 241 may sense information on an operation of the remote control device 200 based on x, y, and z axes, and the acceleration sensor 243 may sense information on a moving speed of the remote control device 200. Meanwhile, the remote control device 200 may further include a distance measuring sensor, and thus may sense a distance from the display 180 of the display device 100.

The output unit 250 may output a video or voice signal corresponding to an operation of the user input unit 230 or corresponding to a signal transmitted from the display device 100. Through the output unit 250, the user may recognize whether the user input unit 230 is operated or whether the display device 100 is controlled.

For example, the output unit 250 may include an LED module 251 that is turned on when the user input unit 230 is operated or when a signal is transmitted and received with the display device 100 through the wireless communication unit 220, a vibration module 253 that generates vibration, an audio output module 255 that outputs sound, or a display module 257 that outputs an image.

In addition, the power supply unit 260 supplies power to the remote control device 200, and may reduce power waste by stopping power supply when the remote control device 200 does not move for a predetermined time. The power supply unit 260 may resume power supply when a predetermined key provided in the remote control device 200 is operated.

The storage unit 270 may store various types of programs and application data required for control or operation of the remote control device 200. When the remote control device 200 transmits and receives signals wirelessly with the display device 100 through the RF module 221, the remote control device 200 and the display device 100 transmit and receive signals through a predetermined frequency band.

The controller 280 of the remote control device 200 may store, in the storage unit 270, and refer to information on a frequency band capable of transmitting and receiving signals wirelessly with the display device 100 paired with the remote control device 200.

The controller 280 controls overall matters related to control of the remote control device 200. The controller 280 may transmit, to the display device 100 through the wireless communication unit 220, a signal corresponding to an operation of a predetermined key of the user input unit 230 or a signal corresponding to movement of the remote control device 200 sensed by the sensor unit 240.

In addition, the voice acquisition unit 290 of the remote control device 200 may acquire audio.

The voice acquisition unit 290 may include at least one microphone 291, and may acquire audio through the microphone 291.

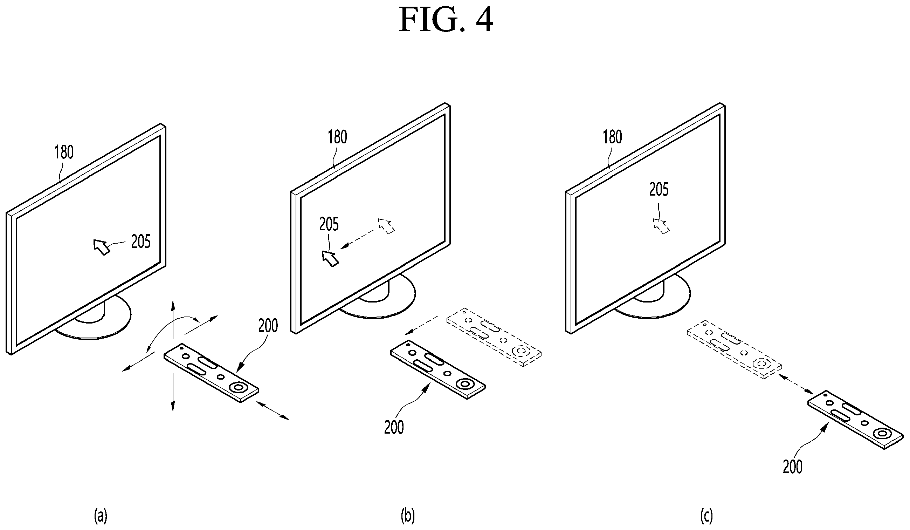

Next, FIG. 4 will be described.

FIG. 4 illustrates an example of using a remote control device according to an embodiment of the present disclosure.

(a) of FIG. 4 illustrates that a pointer 205 corresponding to the remote control device 200 is displayed on the display 180.

A user may move or rotate the remote control device 200 up and down, left and right. The pointer 205 displayed on the display 180 of the display device 100 corresponds to movement of the remote control device 200. Such a remote control device 200 may be referred to as a spatial remote controller since the pointer 205 is moved and displayed according to movement in a 3D space as illustrated in the drawing.

(b) of FIG. 4 illustrates that when a user moves the remote control device 200 to the left, the pointer 205 displayed on the display 180 of the display device 100 also moves to the left correspondingly.

Information on movement of the remote control device 200 sensed through a sensor of the remote control device 200 is transmitted to the display device 100. The display device 100 may calculate coordinates of the pointer 205 from the information on movement of the remote control device 200. The display device 100 may display the pointer 205 to correspond to the calculated coordinates.

(c) of FIG. 4 illustrates a case in which, while a specific button in the remote control device 200 is pressed, a user moves the remote control device 200 away from the display 180. Accordingly, a selection area within the display 180 corresponding to the pointer 205 may be zoomed in and displayed in an enlarged manner.

In contrast, when the user moves the remote control device 200 closer to the display 180, a selection area within the display 180 corresponding to the pointer 205 may be zoomed out and displayed in a reduced manner.

Meanwhile, when the remote control device 200 moves away from the display 180, the selection area may be zoomed out, and when the remote control device 200 moves closer to the display 180, the selection area may be zoomed in.

In addition, while a specific button in the remote control device 200 is pressed, recognition of up, down, left, and right movement may be excluded. That is, when the remote control device 200 moves away from or approaches the display 180, up, down, left, and right movements are not recognized, and only forward and backward movement may be recognized. When the specific button in the remote control device 200 is not pressed, only the pointer 205 moves according to up, down, left, and right movement of the remote control device 200.

Meanwhile, a moving speed or a moving direction of the pointer 205 may correspond to a moving speed or a moving direction of the remote control device 200.

Meanwhile, the pointer in the present specification refers to an object displayed on the display 180 corresponding to an operation of the remote control device 200. Accordingly, various shapes of objects other than an arrow shape illustrated in the drawing as the pointer 205 are possible. For example, the pointer may include a concept including a dot, a cursor, a prompt, a thick outline, and the like. In addition, the pointer 205 may be displayed corresponding to any one point on a horizontal axis and a vertical axis on the display 180, and may also be displayed corresponding to a plurality of points such as a line or a surface.

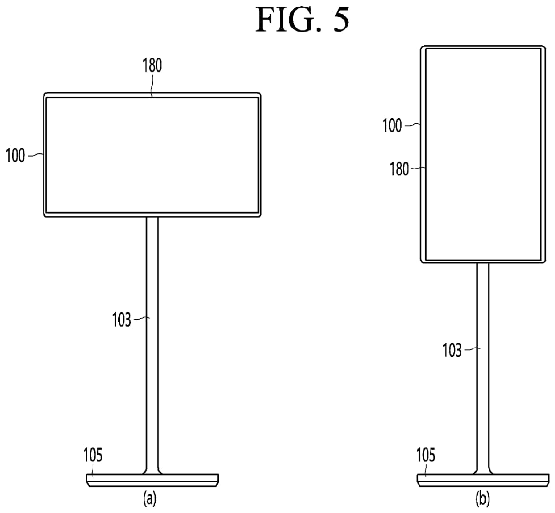

(a) of FIG. 5 and (b) of FIG. 5 are views for explaining a landscape mode and a portrait mode of a stand-type display device according to an embodiment of the present disclosure.

Referring to (a) of FIG. 5 and (b) of FIG. 5, a stand-type display device 100 is illustrated.

A shaft 103 and a stand base 105 may be connected to the display device 100.

The shaft 103 may connect the display device 100 and the stand base 105. The shaft 103 may extend vertically.

A lower end of the shaft 103 may be connected to an edge portion of the stand base 105.

The lower end of the shaft 103 may be rotatably connected to a peripheral portion of the stand base 105.

The display device 100 and the shaft 103 may rotate about a vertical axis with respect to the stand base 105.

An upper portion of the shaft 103 may be connected to a rear surface of the display device 100.

The stand base 105 may support the display device 100.

The display device 100 may be configured to include the shaft 103 and the stand base 105.

The display device 100 may rotate about a point where the upper portion of the shaft 103 and the rear surface of the display 180 are in contact.

(a) of FIG. 5 indicates operation in a landscape mode in which a horizontal length of the display 180 is greater than a vertical length, and (b) of FIG. 5 indicates operation in a portrait mode in which a vertical length of the display 180 is greater than a horizontal length.

A user may move the stand-type display device 100. That is, the stand-type display device 100 has improved mobility compared to a fixed device, and thus the user is not restricted by a placement position.

Control of the display device 100 using the remote control device 200 is becoming generalized. In the case of a set-top box (STB) connected to the display device 100, a remote control device finding function is implemented based on an always connection concept through direct advertising (Direct Advertising (ADV)). In this case, even when the set-top box (STB) is in an off state, the remote control device repeatedly performs direct advertising (Direct ADV) by itself. In this process, when the set-top box (STB) is switched to an on state, the remote control device 200 is reconnected to the set-top box (STB) through the repeatedly performed direct advertising (Direct ADV), and maintains a connection state.

Meanwhile, depending on a type of the remote control device 200, for example, in a case of a remote control device 200 capable of supporting a pointing function based on a gyro sensor, current consumption is higher than that of a remote control device 200 that does not support such a function. Accordingly, when an always connection concept is applied to such a remote control device 200, usable time of the remote control device 200 inevitably decreases significantly due to high current consumption.

In a general remote control device, in an always connection state, current consumption may be about 500uA to 1mA. On the other hand, in a case of a remote control device 200 including various sensors and having a wheel, standby current may be higher than that of a general remote control device. As described above, this may cause a reduction in usable time of the remote control device 200.

In the present disclosure, in the above situation, for example, pairing between the remote control device 200 and the display device 100 may be performed only when a condition is satisfied. Meanwhile, in the above, the condition may include, for example, a case in which a remote control device finding function is activated. Such a remote control device finding function may be activated by, for example, an input through a physical key (or button) (or local key) provided on a rear surface of the display device 100, or far-field voice recognition. Accordingly, according to the present disclosure, by controlling whether to connect to the remote control device 200 in the display device 100, unnecessary power consumption of the remote control device 200 can be reduced, and furthermore, usable time of the remote control device 200 can be further extended compared to the related art.

Meanwhile, the remote control device 200 transmits an advertising packet such that, unlike a packet for initial pairing with the display device 100, the advertising packet can be scanned only by a previously paired TV, thereby preventing malfunction that may occur in a pairing process for finding the remote control device 200.

According to at least one embodiment of the present disclosure, before pairing between the display device 100 and the remote control device 200, a first data packet is received, and after pairing, a second packet is received, wherein the second packet is scanned only by the display device 100, and when an input for a remote control device finding function is obtained, a pairing operation may be performed based on the second data packet.

In this regard, the remote control device 200 may additionally include a buzzer and may perform advertising periodically in relation to a remote control device finding function, but in the display device, by implementing advertising packet filtering such that connection is not made when there is no request for the finding function, connection is made only when a user requests a remote control device finding function, thereby enabling the remote control device 200 to be found while suppressing an increase in current consumption as much as possible.

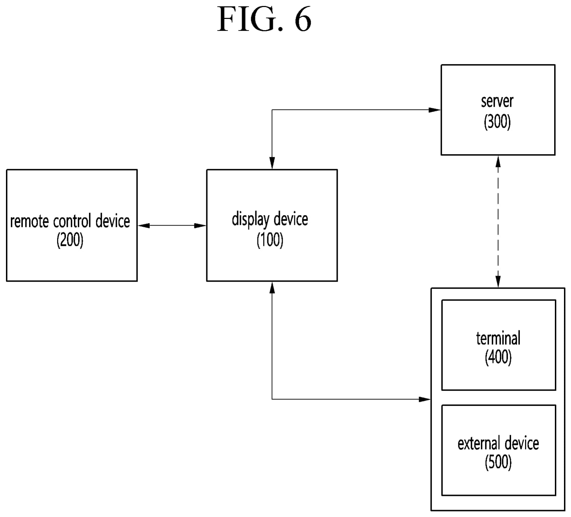

FIG. 6 is a block diagram illustrating a connection control operation between a display device and a remote control device according to an embodiment of the present disclosure.

Referring to FIG. 6, at least one of a server 300, a terminal 400, or an external device 500 may further be involved in the connection control operation between the display device 100 and the remote control device 200.

Here, the display device 100 may include, for example, a memory and a processor. Here, the memory may have the same configuration as the memory 140 of FIG. 1. In addition, the processor may have the same configuration as, include, or be included in the controller 170 of FIG. 1.

The remote control device 200 may transmit a packet to the display device 100. At this time, the packet may be transmitted periodically.

When a packet is received from the remote control device 200, the display device 100 may determine whether there is a previous pairing history with the corresponding remote control device 200. As a result of the determination, when there is no previous pairing history with the corresponding remote control device 200, that is, when it is an initial pairing request, the display device 100 may perform a pairing operation with the corresponding remote control device 200.

The present disclosure is particularly related to a case in which a location of the remote control device is unknown and thus the remote control device is to be found. As described above, in the related art, the remote control device is found by the remote control device itself or by a set-top box (STB), but there are problems as described above. In particular, in a case of a remote control device including a sensor or a wheel, since standby current is large, it is necessary to reduce unnecessary power consumption.

In such a situation, various embodiments of the present disclosure will be described.

The remote control device 200 may continuously transmit packets periodically. At this time, transmission of the packet by the remote control device 200 may be regarded as broadcast.

The display device 100 may receive a packet of the remote control device 200 as long as power is supplied, even in a standby state.

Unlike the related art, when a packet is received from the remote control device 200, the display device 100 according to an embodiment of the present disclosure may connect to the remote control device 200 only when a condition is satisfied, and otherwise may ignore or filter the packet received from the remote control device 200.

In the present disclosure, the condition may include, for example, whether a remote control device finding function is requested and activated as described above.

In the above, the remote control device finding function may be requested and activated through, for example, a hard function key or a physical function key provided in the display device 100, a virtual function key provided on a display panel, or a terminal 400 or an external device 500. In the above, the remote control device finding function through the terminal 400 may be activated by receiving and identifying, through the server 300 or directly, a signal including an input selected through an application screen executed in the terminal 400 in relation to the remote control device. In addition, the remote control device finding function through the external device 500 may be activated in the display device 100 by, for example, when the external device is a voice recognition speaker or a microphone, receiving a voice input related to a request for the remote control device finding function of a user, and transmitting a signal corresponding thereto to the display device 100 through the server 300 or directly based on the received voice input.

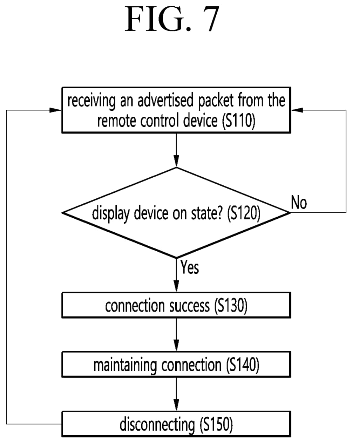

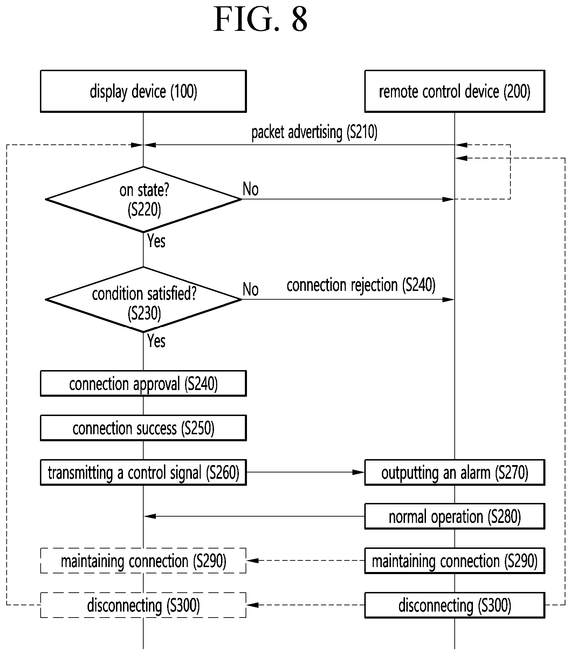

FIGS. 7 and 8 are flowcharts illustrating a connection operation of a display device 100 and a remote control device 200 according to embodiments of the present disclosure.

FIG. 7 may illustrate a connection operation in an initial pairing process between the display device 100 and the remote control device 200 or a connection operation in a general situation.

In addition, FIG. 7 is described from a perspective of the display device 100 or a processor of the display device 100, but is not limited thereto.

The remote control device 200 related to the present disclosure may perform, for example, the following two types of advertising. One may be, for example, an un-direct advertising (Un-direct ADV) type, and the other may be a direct advertising (Direct ADV) type. However, the present disclosure is not limited thereto.

In the above, the un-direct advertising type indicates, for example, packet advertising transmitted when the remote control device 200 is not paired with the display device 100, which may be a kind of broadcast concept. Accordingly, in the un-direct advertising type, since a packet is not advertised toward only a specific device, the packet may be connected to all devices that receive the broadcast packet.

On the other hand, the direct advertising type may indicate, for example, a case in which a packet is advertised when already paired with the display device 100. In the case of the direct advertising type, for example, a link key may be included in the advertised packet, and connection may be made only with the display device 100 having a connection history.

Referring to FIG. 7, when a movement of a key or a sensor occurs, the remote control device 200 may attempt to connect to the display device 100. However, when a location of the remote control device 200 is unknown, in order to find the remote control device, the remote control device 200 needs to be able to attempt connection by itself. In other words, for a remote control device finding function, the remote control device 200 may perform advertising so as to always be connectable to the display device 100 (S110). At this time, the remote control device 200 may perform advertising at a preset period, and the preset period may be arbitrarily changeable.

The same applies even when the remote control device 200 is located near a user or the display device 100, because the remote control device 200 cannot recognize by itself what state it is in.

In addition, since the remote control device 200, which is basically a slave device, cannot recognize whether power of the display device 100, which is a master device, is in an on state or an off state, the remote control device 200 may continuously advertise packets.

When power of the display device 100, which is the master device, is in an off state, connection between the master and the slave continuously fails. Thereafter, when the power of the display device 100, which is the master device, is switched to an on state, the remote control device 200 that continuously advertises may be connected to the display device 100 (Connection Success) (S120/S130).

After the remote control device 200 succeeds in connecting to the display device 100, when movement is not detected for a preset time, the remote control device 200 may disconnect a connection with the display device 100 by itself. In this case, even when an application on the terminal 400 or a voice input through the external device 500 is received and control of the display device 100 is continuously performed, the same may apply.

Accordingly, thereafter, since the remote control device 200 needs to perform advertising again in order to perform the remote control device finding function, connection and disconnection may be repeatedly performed.

According to an embodiment, when a user activates the remote control device finding function through the display device 100, the display device 100 may broadcast a control signal so that the remote control device 200 may perform advertising in order to find the remote control device 200.

Accordingly, since the remote control device 200 has a concept similar to an always connection except when connection with the display device 100 is temporarily released, current consumption of the remote control device 200 continuously increases, and thus usable time of the remote control device 200 inevitably decreases.

In the above, disconnection may be performed not by the remote control device 200 itself but under control of the display device 100. In addition, the display device 100 may also be controlled by the server 300.

FIG. 8 is a view illustrating a detailed connection operation between a display device 100 and a remote control device 200 according to an embodiment of the present disclosure.

Referring to FIG. 8, the remote control device 200 may advertise a packet to the display device 100 (S210).

When a packet is advertised from the remote control device 200, the display device 100 may determine whether it is in an on state (S220).

When the display device 100 is not in the on state, the display device 100 may wait to receive a next packet advertised from the remote control device 200.

On the other hand, when the display device 100 is in the on state, the display device 100 may determine whether a condition is satisfied (S230). Here, as described above, the condition may be, for example, whether a remote control device finding function is activated.

As a result of the determination in operation S230, when the display device 100 is in the on state but a preset condition is not yet satisfied, the display device 100 may reject connection with the remote control device 200. In this case, rejection of the connection may be performed, for example, by ignoring a packet advertised by the remote control device 200 or through filtering. Alternatively, the display device 100 may transmit, to the remote control device 200 that advertised the packet, a control signal including a control command indicating connection rejection.

On the other hand, as a result of the determination in operation S230, when the display device 100 is in the on state and the preset condition is satisfied, the display device 100 may approve connection with the remote control device 200 (S240) and may perform the connection (connection success) (S250).

When connection with the remote control device 200 that advertised the packet is successful through operation S250, the display device 100 may transmit a control signal so that the connected remote control device 200 operates such that a user can find the remote control device 200 in accordance with the condition, that is, the remote control device finding function (S260).

Here, the control signal may include a control command for controlling or requesting the remote control device 200 to output a sound. The control signal may include a control command for instructing or requesting the remote control device 200 to transmit, to the display device 100, at least one of a battery state of the remote control device 200 or location information related to location identification information.

Accordingly, the remote control device 200 may output, for example, an alarm (S270). For this, the remote control device 200 may include an output unit (not shown). In this case, the output unit may include, for example, a buzzer.

Meanwhile, when the remote control device 200 does not transmit a simple alarm signal through a buzzer, the remote control device 200 may output information on the display device 100 or through the terminal 400 or the external device 500.

Thereafter, the remote control device 200 may perform a normal operation (S280).

Then, the remote control device 200 may maintain connection with the display device 100 (S290) and may thereafter release the connection (S300).

In the above, maintaining the connection may be performed when a user input is obtained on the remote control device 200 within a preset time or when movement of the remote control device 200 is detected. Conversely, connection between the display device 100 and the remote control device 200 may be released when a user input is not obtained for a preset time or longer or when movement of the remote control device 200 is not detected.

In FIG. 8, although a subject of maintaining connection and releasing connection is described as the remote control device 200, at least one of them may be performed under control of the display device 100.

In the above, when connection between the display device 100 and the remote control device 200 is released, as described above, the remote control device 200 may advertise a packet again, and the display device 100 may receive the packet.

The above-described operations may be repeatedly performed.

In FIGS. 7 and 8, some operations of the display device 100 may be performed not by the display device 100 itself but based on a control command obtained from at least one of the server 300, the terminal 400, or the external device 500.

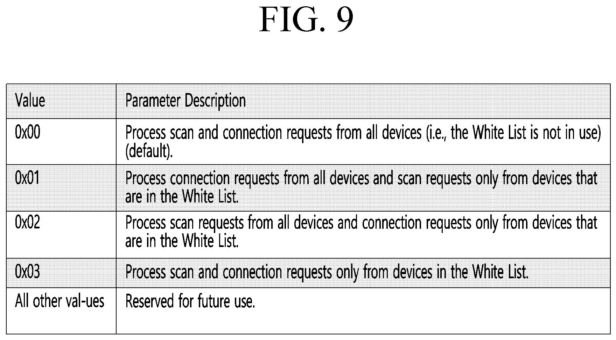

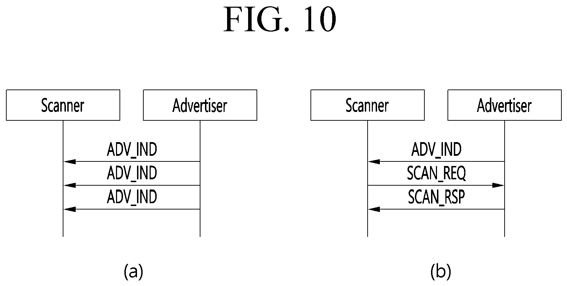

FIGS. 9 and 10 are views illustrating an advertising filter policy according to an embodiment of the present disclosure.

FIG. 9 illustrates a definition of an advertising filter policy (Advertising_Filter_Policy) related to the present disclosure.

In this case, FIG. 9 may define the advertising filter policy with respect to the above-described un-direct advertising packet between the display device 100 and the remote control device 200.

Referring to FIG. 9, parameter values of the advertising filter policy are defined, for example, from 0x00 to 0x03, and the remaining values are reserved for future use.

When the parameter value of the advertising filter policy is 0x00, the display device 100 may process scan and connection requests from all devices by default. In this case, all devices may include the remote control device 200. In addition, all devices may include devices not included in a white list to be described later.

In other words, the remote control device 200 may transmit an un-direct advertising packet and may perform advertising such that connection is possible with all display devices belonging to a network when pairing is performed (0x00).

As described above, after transmitting the un-direct advertising packet with the parameter value set to 0x00 and being paired with the display device 100, the remote control device 200 may change and set the parameter value from 0x00 to 0x03 so as to perform or prepare for a remote control device finding function. Accordingly, thereafter, a parameter of a packet un-directly advertised periodically by the remote control device 200 may be 0x03. According to one embodiment, such a parameter value may be maintained until disconnection or termination of pairing.

That is, both the display device 100 and the remote control device 200 set and change the advertising filter policy to 0x00, and after the change, scanning and connection may be performed only with the paired display device 100. For this, the display device 100 may create and store a white list for paired devices. In this case, the white list includes the paired remote control device 200.

In this regard, when the remote control device 200 is paired with the display device 100, the remote control device 200 may register a MAC of the display device in the white list. On the other hand, in this case, in the case of direct advertising, the advertising filter policy may not be used.

When the parameter value of the advertising filter policy is 0x01, connection requests may be received from all devices, but scan requests may be received and processed only from devices included in the white list.

In addition, when the parameter value of the advertising filter policy is 0x02, scan requests may be received from all devices, but connection requests may be received and processed only from devices included in the white list.

In relation to the present disclosure, advertising settings may be changed based on the remote control device 200. All advertising filter policies correspond to un-direct advertising, wherein a parameter value 0x00 is used for initial pairing, and 0x03 enables scanning and connection only with a paired device when a remote control device finding function is activated.

As such, in the present disclosure, an advertising type related to the remote control device finding function may be added.

hat is, through definition of the parameter value 0x03, when the remote control device finding function is set, the advertising filter policy may be set and applied such that scan and connection processing is possible only in the paired display device 100, that is, a white list may be configured. Accordingly, even when the remote control device 200 performs un-direct advertising, only the paired display device 100 may be controlled to be connected to the remote control device 200.

As described above, when the remote control device finding function is implemented through direct advertising, since connection is unconditionally made, the advertising filter policy may not be applied. Accordingly, the effectiveness of the remote control device finding function through direct advertising may be reduced.

By including specific information in an advertising data packet, when a condition, that is, the remote control device finding function is not activated, the display device 100 may determine whether the data packet is an advertising data packet related to the remote control device finding function, and may reject the connection. Here, rejection may be a concept such as ignoring or filtering as described above. When the data packet is advertised without the corresponding information, since it is direct advertising, connection may be made in the same manner as a conventional method.

The remote control device finding function may be activated based on at least one of a specific key input, a combination of special keys, or utterance of a far-field wake word, and in this case, the display device 100 may scan the remote control device 200 and then perform connection.

(a) of FIG. 10 illustrates a passive scan, and (b) of FIG. 10 illustrates an active scan.

Referring to (a) of FIG. 10, the passive scan indicates a case in which only a direct advertising device is connectable. An advertiser, that is, the remote control device, advertises a data packet (ADV_IND) including an indicator to a scanner, that is, the display device 100, in a one-way manner.

On the other hand, referring to (b) of FIG. 10, the active scan indicates that all un-direct advertising devices are connectable. An advertiser, that is, the remote control device 200, advertises a data packet (ADV_IND) including an indicator, and when the scanner, that is, the display device 100, receives the advertised data packet (ADV_IND), the scanner transmits a scan request (SCAN_REQ) to the advertiser, and the advertiser may return a scan response (SCAN_RSP) in response thereto.

In the present disclosure, an operation when the advertising filter policy is changed will be described as follows.

When the parameter value is set to 0x00, the remote control device 200 may perform a scan response whenever another device performs a scan request. Here, the other device may include, for example, the display device 100.

When the parameter value is set to 0x03, the remote control device 200 may not perform a scan response even when another device performs a scan request.

Since the remote control device 200 performing un-direct advertising is searched, even a display device that is not paired may perform a scan request.

However, since the display device that performs the scan request does not have a MAC address registered in a white list, the remote control device 200 may not perform a scan response.

That is, even when a scan request or a connection request is received, the remote control device 200 may respond only to a device registered in the white list.

Meanwhile, when an event or an interrupt such as a key, a motion, or a wheel occurs in the remote control device 200 while un-direct advertising is being performed for a remote control device finding function, since this corresponds to direct advertising, a connection operation may be immediately performed and a normal operation may be performed.

In the present disclosure, for the remote control device finding function, the remote control device 200 performs advertising at a preset period so as to be connectable to the display device 100 at any time.

In this case, when power of the display device 100, which is a master device, is in an off state, connection continuously fails. Thereafter, when the power of the display device 100 is switched to an on state, from that time, the display device 100 may be connected to an advertising device.

The display device 100 may determine whether the remote control device finding function is activated based on activation of a special key related to the remote control device finding function among local keys, for example, when a volume button is pressed for 5 seconds or more, or based on far-field voice recognition such as a wake word, and when the special key corresponds to N (not pressed), connection is rejected, and when it corresponds to Y (pressed), the display device 100 may be set to allow connection for a predetermined time. Here, the predetermined time may be set, for example, to 15 seconds to 1 minute, but is not limited thereto and may be arbitrarily changed.

Meanwhile, when a user utters a command related to the remote control device finding function through far-field voice recognition, the display device 100 allows the corresponding connection. The utterance may include, for example, "find the remote control device" or "where is the remote control device?"

When the display device 100 approves connection with the remote control device 200 and connection is established, the display device 100 may transmit an alarm signal, for example, a buzzer enable command (Buzzer Enable CMD), to the remote control device 200, and accordingly, the remote control device 200 may sound a buzzer to expose a location of the remote control device.

A user may identify and find the location of the remote control device 200 through a buzzer sound of the remote control device 200. When the user lifts and moves the remote control device 200 by hand, due to an event or an interrupt generated at this time, the remote control device finding is recognized as completed, and the buzzer may be stopped. In this case, stopping of the buzzer of the remote control device 200 may be performed by generating and transmitting a buzzer stop command from the display device 100 after receiving and identifying the interrupt.

When the remote control device finding is completed, the remote control device 200 operates in the same manner as before.

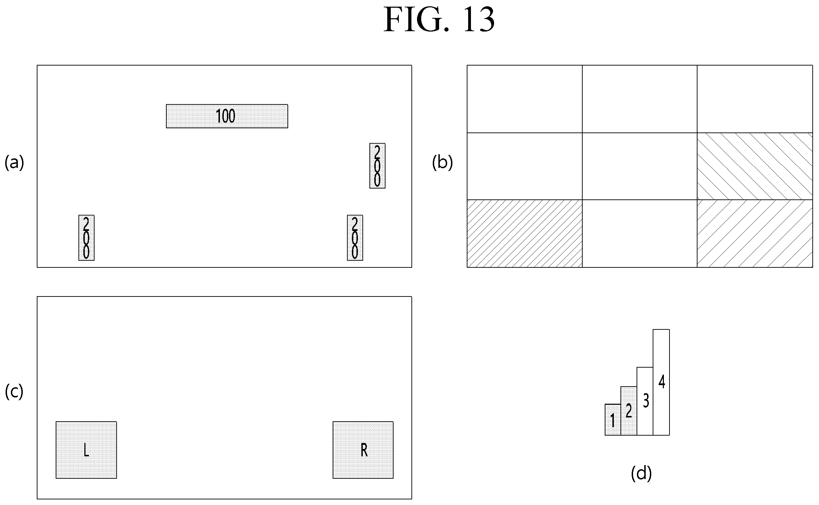

In this regard, FIG. 13 is a view illustrating an example of a user interface provided by a display device when a remote control device finding function is activated according to an embodiment of the present disclosure.

In (a) of FIG. 13, information on an expected location of the display device 100 and the remote control device 200 may be provided on a display or in a partial area of the display through a pop-up window. The same applies to (c) of FIG. 13. However, in (c) of FIG. 13, information on an expected location of the remote control device 200 may be provided only based on a front panel of the display device 100, for example, a front of the panel, a left side (L) of the panel, or a right side ^{®} of the panel.

In the cases of (a) and (c) of FIG. 13, the display device 100 may configure and provide information on an expected location of the remote control device 200 based on a strength of a scan request signal or a scan response signal or a signal reception direction. In this case, according to another embodiment, the display device 100 may configure and provide information on a location of the remote control device 200 through a ToF (Time of Flight) sensor or a LiDAR sensor. Alternatively, the remote control device 200 may provide its own location information (e.g., GPS information), and the display device 100 may compare the location information provided by the remote control device 200 with its own location information to provide information on an expected location of the remote control device 200.

(b) of FIG. 13, similar to (a) of FIG. 13, may provide information indicating in which one of divided areas around the display device the remote control device 200 may be found by dividing a surrounding area of the display device in the display device 100. In this case, the display device 100 may provide information on an expected location for some divided areas using color, or when the same color is used, using color density or saturation, and may also provide probability information (text or digits are also possible) of occurrence of the remote control device 200.

In (d) of FIG. 13, as information provided in combination with or independently from (a) to (c) of FIG. 13, distance between the remote control device 200 and the display device 100 or signal strength information may be provided based on the above-described signal strength and the like. For example, in (d) of FIG. 13, a signal level or a distance level is displayed in two levels in a form of a bar graph, and when this is a signal level, since the signal level is low, it may indicate that a distance between the two components is far, and when this is a distance level, since the distance level is low, it may indicate that the distance between the two components is close.

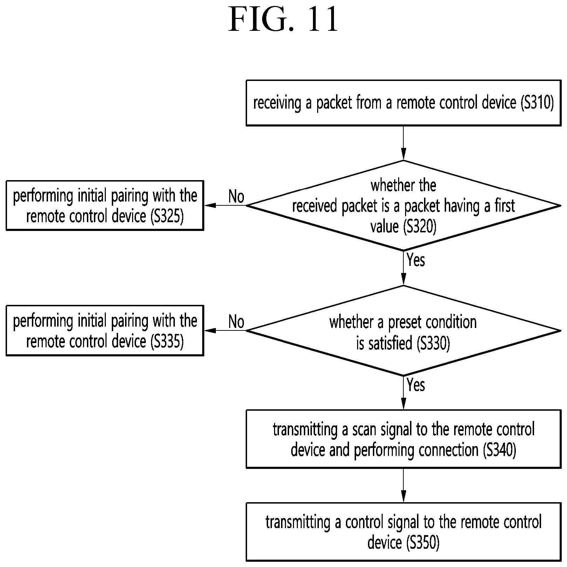

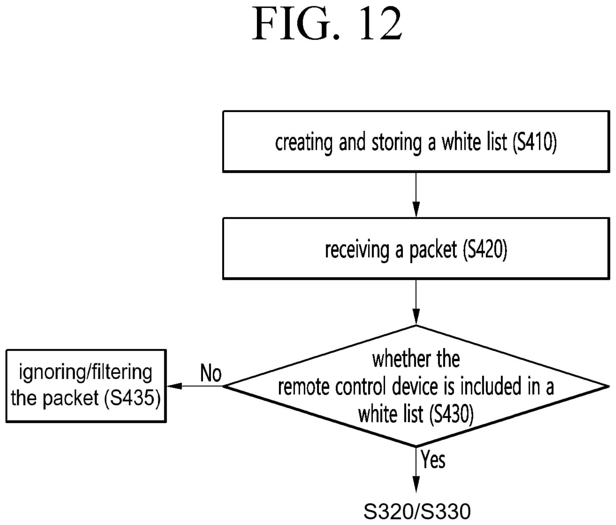

FIGS. 11 and 12 are flowcharts illustrating a connection operation of a display device and a remote control device according to another embodiment of the present disclosure.

Referring to FIG. 11, the display device 100 may receive a packet from the remote control device 200 (S310).

The display device 100 may determine whether a parameter value of the packet received from the remote control device 200 is a first value (S320).

As a result of the determination in operation S320, when the parameter value of the packet received from the remote control device 200 is not the first value, the display device 100 may be paired with the remote control device 200 (S325). In this case, the first parameter value may be, for example, 0x03 of FIG. 9. Accordingly, the pairing may be initial pairing between the remote control device 200 and the display device 100.

As a result of the determination in operation S320, when the parameter value of the packet received from the remote control device 200 is the first value, the display device 100 may determine whether a preset condition is satisfied (S330).

As a result of the determination in operation S330, when the preset condition is not satisfied, that is, when a remote control device finding function is not activated, the display device 100 may ignore or filter the packet received from the remote control device 200 in operation S310 (S335).

As a result of the determination in operation S330, when the preset condition is satisfied, the display device 100 may transmit a scan signal to the remote control device 200 and may perform connection (S340).

The display device 100 may transmit a control signal to the remote control device 200 (S350).

Next, in FIG. 12, the display device 100 may create and store a white list including devices having a previous pairing history (S410). In this case, the stored white list may include the remote control device 200 having a previous pairing history.

The display device 100 may receive a packet from the remote control device 200 (S420).

The display device 100 may determine whether the remote control device 200 that advertised the packet is included in the white list (S430).

As a result of the determination in operation S430, when the remote control device 200 is not included in the white list, the display device 100 may ignore or filter the packet received from the corresponding remote control device (S435).

On the other hand, as a result of the determination in operation S430, when the remote control device 200 is included in the white list, the display device 100 may perform operations S320 and S330.

Even when not explicitly mentioned, an order of at least some operations disclosed in the present disclosure may be performed simultaneously, may be performed in an order different from the above-described order, or some operations may be omitted or added.

According to an embodiment of the present disclosure, the above-described method may be implemented as a code readable by a processor in a medium in which a program is recorded. Examples of a processor-readable medium include a ROM, a RAM, a CD-ROM, a magnetic tape, a floppy disk, and an optical data storage device.

The display device described above is not limitedly applied to the configurations and methods of the above-described embodiments, and the above embodiments may be configured by selectively combining all or part of each embodiment so that various modifications may be made.

### [INDUSTRIAL APPLICABILITY]

The present disclosure relates to a display device and a method of operating the same, which are capable of reducing unnecessary power consumption of a remote control device and increasing an available usage time by allowing pairing with the remote control device only when a predetermined condition is satisfied in the display device, and may be utilized in a connection process between devices in various technical fields, and thus has industrial applicability.

## Claims

1. A display device comprising:
a memory; and
a processor configured to:
receive a packet from a remote control device,
when the received packet is a packet having a first parameter value and a preset condition is satisfied, perform pairing by transmitting a scan signal to the remote control device, and to transmit a control signal related to the preset condition to the paired remote control device.

2. The display device of claim 1, wherein the processor is configured to perform initial pairing with the remote control device when the received packet is a packet having a second parameter value.

3. The display device of claim 1, wherein when the preset condition is not satisfied, the processor is configured to control such that the pairing is not performed by ignoring or filtering the packet having the first parameter value.

4. The display device of claim 1, wherein the processor is configured to create a white list including a remote control device having a previous pairing history and store the white list in the memory.

5. The display device of claim 4, wherein the condition includes at least one of whether the remote control device is included in the white list and whether a remote control device finding function is activated.

6. The display device of claim 1, wherein the control signal includes a control command for controlling the paired remote control device to output a sound.

7. The display device of claim 1, wherein the processor is configured to determine whether the preset condition is satisfied based on at least one of an input through a physical button provided on the display device, an input through a virtual button provided on a display panel, and a voice input through a microphone provided on the display device.

8. A method of operating a display device, the method comprising:
receiving a packet from a remote control device;
identifying whether the received packet is a packet having a first parameter value;
when a preset condition is satisfied, performing pairing by transmitting a scan signal to the remote control device; and
transmitting a control signal related to the preset condition to the paired remote control device.

9. The method of claim 8, wherein, in identifying whether the received packet is a packet having the first parameter value, when the received packet is identified as a packet having a second parameter value, initial pairing with the remote control device is performed.

10. The method of claim 8, wherein, when the preset condition is not satisfied, the packet having the first parameter value is ignored or filtered to control such that the pairing is not performed.

11. The method of claim 8, further comprising creating and storing a white list including a remote control device having a previous pairing history.

12. The method of claim 11, wherein the condition includes at least one of whether the remote control device is included in the white list and whether a remote control device finding function is activated.

13. The method of claim 8, wherein the control signal includes a control command for controlling the paired remote control device to output a sound.

14. The method of claim 8, wherein the preset condition is determined to be satisfied based on at least one of an input through a physical button provided on the display device, an input through a virtual button provided on a display panel, and a voice input through a microphone provided on the display device.
